# EUROPEAN PATENT SPECIFICATION

(11) **EP 0 820 130 B1**
(45) Date of publication and mention of the grant of the patent: **29.09.2004**
(21) Application number: 97112240.3
(22) Date of filing: 17.07.1997
(51) Int. Cl.: H01S 3/08, H01S 3/109, H01S 3/0941

(54) **Laser beam emitting apparatus**
Vorrichtung zur Emission eines Laserstrahls
Appareil émettant un faisceau laser

(30) Priority: 19.07.1996 JP 20879996
(43) Date of publication of application: 21.01.1998
(73) Proprietor: KABUSHIKI KAISHA TOPCON, Tokyo 174 (JP)
(72) Inventor: Momiuchi, Masayuki, Itabashi-Ku, Tokyo 174 (JP); Koizumi, Hiroshi, Itabashi-Ku, Tokyo 174 (JP); Ohishi, Masahiro, Itabashi-Ku, Tokyo 174 (JP); Goto, Yoshiaki, Itabashi-Ku, Tokyo 174 (JP); Ohtomo, Fumio, Itabashi-Ku, Tokyo 174 (JP)
(74) Representative: Altenburg, Udo, Dipl.-Phys.

(56) References cited:
- EP-A- 0 455 383
- WO-A-95/34111
- US-A- 5 497 388
- PATENT ABSTRACTS OF JAPAN vol. 015, no. 074 (E-1036), 21 February 1991 (1991-02-21) & JP 02 295181 A (SUMITOMO METAL MINING CO LTD), 6 December 1990 (1990-12-06)
- LAPORTA P ET AL: "HIGH-POWER AND HIGH-EFFICIENCY DIODE-PUMPED ER:YB:GLASS LASER" ELECTRONICS LETTERS, vol. 28, no. 5, 27 February 1992 (1992-02-27), pages 490-492, XP000292696 ISSN: 0013-5194

## Description

### BACKGROUND OF THE INVENTION

The present invention relates to a laser beam emitting apparatus, and particularly to a laser beam emitting apparatus comprising a laser crystal, a laser light source for emitting pumping light to the laser crystal, and an output mirror, wherein a first dielectric reflecting film having a high transmittance (HT) to the pumping light emitted from the laser light source is formed on an end surface of the laser crystal on the laser light source side and a second dielectric reflecting film having a high reflectivity (HR) to the pumping light emitted from the laser light source is formed on an end surface of the laser crystal on the output mirror side, whereby a laser beam can be emitted at a high efficiency.

In the optical applications such as optical survey and optical measurement, there have been strong demands toward development of small-sized laser beam emitting apparatuses operable at low power consumption. To meet these demands, there have been already proposed laser beam emitting apparatuses of a type of pumping a solid laser device using a semiconductor laser (LD) emitting pumping light having a wavelength matched with an absorption wavelength of the solid laser device or using a wavelength tunable laser.

Laser beam emitting apparatuses of another type have been also proposed, in which a nonlinear optical crystal is inserted in an optical resonator composed of a laser crystal and an output mirror for efficiently converting the wavelength of a fundamental wave generated from the laser crystal, resulting in second-harmonic generation (SHG). In this case, typically, Nd:YAG or Nd:YVO₄ doped with Nd has been used as the laser crystal, and KTiOPO₄ (KTP) has been used as the nonlinear optical crystal.

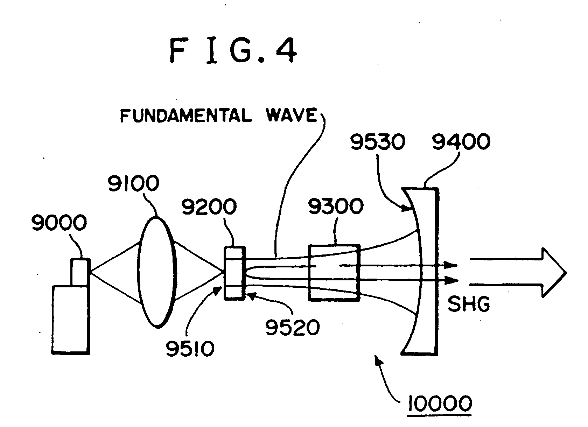

Fig. 4 shows a representative configuration of an internal resonance type harmonic emitting apparatus 10000 pumped by a semiconductor laser.

The apparatus 10000 comprises a semiconductor laser 9000, a condenser lens 9100, a laser crystal 9200, a nonlinear optical crystal 9300, and an output mirror 9400.

The semiconductor laser 9000 serves as a pumping source which emits pumping laser light for generating a fundamental wave. Specifically, the pumping light emitted from the semiconductor laser 9000 is condensed at the laser crystal 9200 through the condenser lens 9100. The semiconductor laser 9000 in this prior art apparatus emits pumping light having a wavelength of 809 nm.

The temperature of the semiconductor laser 9000 is controlled such that the wavelength of the pumping light emitted from the semiconductor laser 9000 substantially conforms to the absorption wavelength of the laser crystal 9200.

For the laser crystal 9200 having a large polarization characteristic of light, it is generally arranged such that the crystal orientation thereof at which the absorption efficiency becomes larger conforms to the polarization direction (TE) of the semiconductor laser 9000. More concretely, for the laser crystal 9200 made from a uniaxial crystal, typically Nd:YVO₄, it is arranged such that the c-axis (z-axis) conforms to the polarization direction (TE) of the semiconductor laser 9000 and the a-axis conforms to the axial direction of the resonator.

The laser crystal 9200 in this prior art apparatus has an ability of generating a fundamental wave having a wavelength of 1064 nm.

A first dielectric reflecting film 9510 is formed on an end surface of the laser crystal 9200 on the semiconductor laser 9000 side. The first dielectric reflecting film 9510 comprises a dielectric multi-layered film having a high transmittance (HT) to pumping light (wavelength: 809 nm) emitted from the semiconductor laser 9000 and also having a high reflectivity (HR) to both a fundamental wave (1064 nm) generated from the laser crystal 9200 and a harmonic (532 nm) generated from the nonlinear optical crystal 9300.

A second dielectric reflecting film 9520 is formed on an end surface of the laser crystal 9200 on the output mirror 9400 side. The second dielectric reflecting film 9520 comprises a dielectric multi-layered film having a high transmittance (HT) to both the fundamental wave (1064 nm) generated from the laser crystal 9200 and the harmonic (532 nm) generated from the nonlinear optical crystal 9300.

The output mirror 9400 is disposed opposite to the laser crystal 9200. A portion of the output mirror 9400 on the laser crystal 9200 side is formed in a concave-mirror shape with a suitable radius, on which a third dielectric reflecting film 9530 is formed. The third dielectric reflecting film 9530 is composed of a dielectric multi-layered film having a high reflectivity (HR) to the fundamental wave (1064 nm) generated from the laser crystal 9200 and also having a high transmittance (HT) to the harmonic (532 nm) generated from the nonlinear optical crystal 9300.

In the prior art apparatus including the combination of the first dielectric reflecting film 9510 of the laser crystal 9200 and the third dielectric reflecting film 9530 of the output mirror 9400, a light flux emitted from the semiconductor laser 9000 pumps the laser crystal 9200 through the condenser lens 9100, causing the laser crystal 9200 to generate light. The light is then reciprocated between the first dielectric reflecting film 9510 of the laser crystal 9200 and the third dielectric reflecting film 9530 of the output mirror 9400, so that it is confined for a long period of time, to be thus amplified by resonance.

In the prior art apparatus, moreover, a nonlinear optical medium 9300 is inserted in an optical resonator formed between the first dielectric reflecting film 9210 of the laser crystal 9200 and the third dielectric reflecting film 9530 of the output mirror 9400.

As the nonlinear optical medium 9300, there is used KTP (KTiOPO₄, potassium-titanyl phosphate), which can be replaced with BBO (β -BaB₂O₄, β-type lithium borate) or LBO (LiB₃O₅, lithium triborate). Such a material used as the nonlinear optical medium 9300 is capable of mainly converting a wave of 1064 nm in wavelength into another wave of 532 nm in wavelength.

The nonlinear optical medium 9300 can be also composed of KNbO₃ (potassium niobate), which is capable of mainly converting a wave of 946 nm in wavelength into another wave of 473 nm in wavelength.

A polarization inversion type wavelength conversion device such as LiTaO₃, LiNbO₃ or LiTaO₃ may be also used as the nonlinear optical medium 9300.

Recently, from viewpoint of the necessity of generating a laser beam with a color other than red, the small-sized internal resonator type harmonic emitting apparatus pumped by a semiconductor laser has come to be noticeable. For example, a green laser beam superior in visibility than a red laser beam has been required for survey instruments, and in general, survey instruments have come to be driven by batteries in terms of maneuverability.

The pumping efficiency of the laser crystal 9200 is, however, dependent on both the absorption coefficient of the laser crystal 9200 to pumping light emitted from the semiconductor laser 9000 and the crystal length thereof. Accordingly, when the absorption coefficient is large, a short crystal can be used, but when the absorption coefficient is small, a long crystal must be used.

For example, the absorption coefficient of the laser crystal made of Nd:YAG (content of Nd: 1 at%) is about 8 cm⁻¹ at the wavelength of 809 nm, and accordingly, the laser crystal is able to absorb 55% of pumping light for the length of 1 mm, and 80% of the pumping light for the length of 2 mm. As a result, for the short crystal, the pumping intensity thereof must be increased.

When used for a survey instrument or the like, the laser beam emitting apparatus is restricted in pumping intensity. For this reason, in the application of optical survey, there have been strong demands toward development of a small-sized laser beam emitting apparatus operable at a high efficiency.

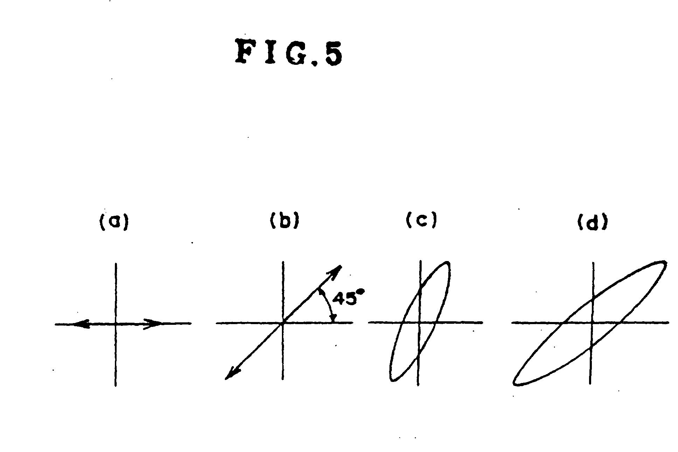

Moreover, when used for a measurement instrument or the like, the laser beam emitting apparatus is required to ensure a high accurate polarization of light. A harmonic generated in an optical resonator by wavelength conversion exhibits linear polarization of light; however, as shown in Fig. 5(b), it is offset 45° with respect to the polarization direction of a fundamental light shown in Fig. 5(a). Accordingly, the harmonic is outputted in the directions of the semiconductor laser 9000 and the output mirror 9400 while being offset 45° with respect to the c-axis (z-axis) of the laser crystal 9200. Thus, the harmonic outputtted in the direction of the semiconductor laser 9000 is reflected from the first dielectric reflecting film 9510 formed on the end surface of the laser crystal 9200 on the semiconductor laser 9000 side, and thereby it receives a phase action due to double refraction of the laser crystal 9200 and the nonlinear optical crystal 9300, with a result that it exhibits elliptical polarization shown in Fig. 5(c).

Consequently, there occurs a problem that the harmonic outputted from the output mirror 9400 exhibits a mixed state of the linear polarization and the elliptical polarization shown in Fig. 5(d), which is apparently unable to be regarded as the linear polarization.

### SUMMARY OF THE INVENTION

An object of the present invention is to provide a laser beam emitting apparatus capable of emitting a laser beam at a high efficiency, and a method of producing the laser beam emitting apparatus.

To achieve the above object, according to the present invention, as defined in Claim 1; there is provided a laser beam emitting apparatus including: an optical resonator at least including a laser crystal and an output mirror; a laser light source for emitting pumping light to the optical resonator; and a nonlinear optical medium, inserted in the optical resonator, for generating a harmonic; wherein a first dielectric reflecting film is formed on an end surface of the laser crystal on the laser light source side, the first dielectric reflecting film having a high transmittance (HT) to the pumping light emitted from the laser light source and also having a high reflectivity (HR) to a fundamental wave generated from the laser crystal; and a second dielectric reflecting film is formed on an end surface of the laser crystal on the output mirror side, the second dielectric reflecting film having a high transmittance (HT) to the fundamental wave generated from the laser crystal, having a high reflectivity (HR) to a harmonic generated from the nonlinear optical medium, and having a high reflectivity (HR) to the pumping light emitted from the laser light source.

### BRIEF DESCRIPTION OF THE DRAWINGS

Fig. 1 is a view illustrating an internal resonator type harmonic emitting apparatus according to a first embodiment of the present invention;
Figs. 2A, 2B are graphs showing reflectivities of a first dielectric reflecting film and a second dielectric reflecting film;
Fig. 3 is a view illustrating a laser beam emitting apparatus according to an example useful for the understanding of the present invention;
Fig. 4 is a view illustrating a prior art internal resonator type harmonic emitting apparatus; and
Fig. 5 is a view illustrating a polarization state of light in a resonator.

### DESCRIPTION OF THE INVENTION

Hereinafter, embodiments of the present invention will be described with reference to the drawings.

### Embodiment 1

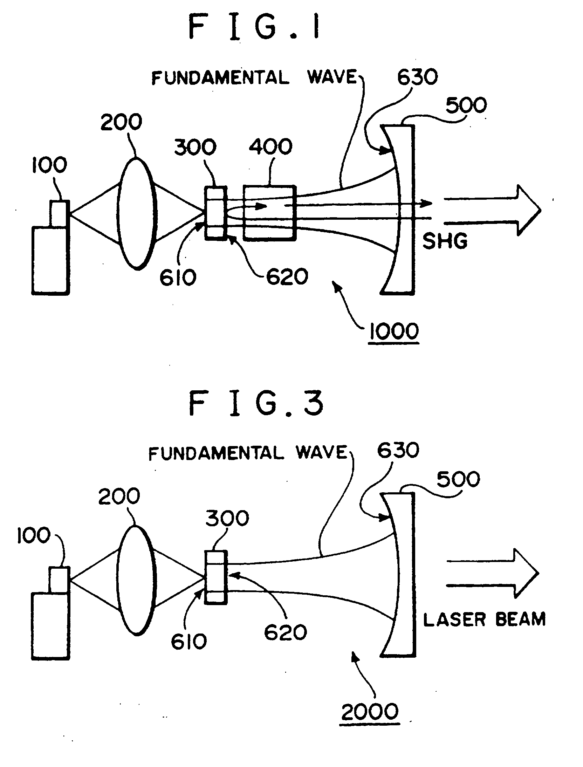

Fig. 1 shows a configuration of an internal resonator type harmonic emitting apparatus 1000 pumped by a semiconductor laser.

The internal resonator type harmonic emitting apparatus 1000 comprises a semiconductor laser 100, a condenser lens 200, a laser crystal 300, a nonlinear optical crystal 400, and an output mirror 500.

The semiconductor laser 100 is equivalent to a laser light source and serves as a pumping source for generating a fundamental wave. The semiconductor laser 100 in this embodiment emits pumping light having a wavelength of 809 nm.

The condenser lens 200 is used for condensing the pumping light emitted from the semiconductor laser 100 at the laser crystal 300.

The laser crystal 300 is used for generating a fundamental wave. In this embodiment, Nd:YVO₄ is used as the laser crystal 300, which generates a fundamental wave having a wavelength of 1064 nm. In addition, a suitable laser crystal other than Nd:YVO₄ can be also used as the laser crystal 300.

A first dielectric reflecting film 610 is formed on an end surface of the laser crystal 300 on the semiconductor laser 100 side. The first dielectric reflecting film 610 comprises a dielectric multi-layered film having a high transmittance (HT) to pumping light (809 nm) emitted from the semiconductor laser 100 and also having a high reflectivity (HR) to a fundamental wave generated from the laser crystal 300.

The dielectric multi-layered film as the first dielectric reflecting film 610 in this embodiment can be formed by alternately laminating SiO₂ thin films each having a low refractive index and Ta₂O₅ thin films each having a high refractive index.

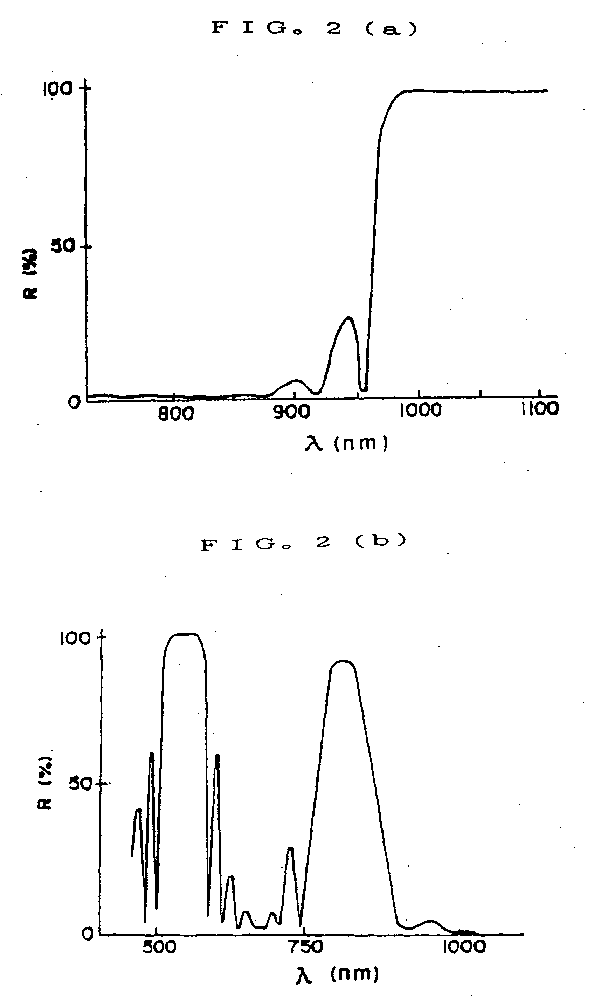

The reflectivity of the first dielectric reflecting film 610 is shown in Fig. 2A.

A second dielectric reflecting film 620 is formed on an end surface of the laser crystal 300 on the output mirror 500 side. The second dielectric reflecting film 620 comprises a dielectric multi-layered film having a high transmittance (HT) to the fundamental wave (1064 nm) generated from the laser crystal 300, having a high reflectivity (HR) to a harmonic (532 nm) generated from the nonlinear optical crystal 400, and also having a high reflectivity (HR) to the pumping light (809 nm) from the semiconductor laser 100.

The dielectric multi-layered film as the second dielectric reflecting film 620 in this embodiment can be formed by alternately laminating SiO₂ thin films each having a low refractive index and ZrO₂ thin films each having a high refractive index.

The relectivity of the second dielectric reflecting film 620 is shown in Fig. 2B.

The high reflectivity (HR) of the second dielectric reflecting film 620 to the pumping light (809 nm) emitted from the semiconductor laser 100 is very effective to prevent an inconvenient phenomenon that the pumping light (809 nm) having passed through the laser crystal 300 is absorbed by the end surface or the like of the nonlinear optical crystal 400 and it causes the temperature rise of the nonlinear optical crystal 400 to thereby reduce the wavelength conversion efficiency thereof.

Moreover, the pumping light (809 nm) passing through the laser crystal 300 is reflected from the second dielectric reflecting film 620 and is thus returned to the laser crystal 300. This allows the absorption efficiency of the laser crystal 300 for the pumping light (809 nm) to be substantially doubled. In addition, since the second dielectric reflecting film 620 prevents reduction in wavelength conversion efficiency due to temperature rise of the nonlinear optical crystal 400, it becomes possible to enhance the harmonic emitting efficiency of the nonlinear optical crystal 400.

The output mirror 500 is disposed opposite to the laser crystal 300. A portion of the output mirror 500 on the laser crystal 300 side is formed into a concave-mirror shape with a suitable radius, on which a third dielectric reflecting film 630 is formed. The third dielectric reflecting film 630 comprises a dielectric multi-layered film having a high reflectivity (HR) to the fundamental wave (1064 nm) generated from the laser crystal 300 and also having a high transmittance (HT) to the harmonic (532 nm) generated from the nonlinear optical crystal 400.

In the internal resonator type harmonic emitting apparatus 1000 including the composition of the first dielectric reflecting film 610 of the laser crystal 300 and the third dielectric reflecting film 630 of the output mirror 500, a light flux emitted from the semiconductor laser 100 pumps the laser crystal 300 through the condenser lens 200, causing the laser crystal 300 to generate light. The light is then reciprocated between the first dielectric reflecting film 610 of the laser crystal 300 and the third dielectric reflecting film 630 of the output mirror 500, so that it is confined for a long period of time, to be thus amplified by resonance.

The nonlinear optical medium 400 is inserted in the optical resonator formed between the second dielectric reflecting film 620 of the laser crystal 300 and the third dielectric reflecting film 630 of the output mirror 500, so that the harmonic generated from the nonlinear optical medium 400 by wavelength conversion is outputted to the outside through the output mirror 500.

The nonlinear optical medium 400 in this first embodiment comprises KTP (KTiOPO₄, potassium-titanyl phosphate), which is capable of converting the fundamental wave (1064 nm) generated from the laser crystal 300 into the harmonic (532 nm). As the nonlinear optical medium 400, BBO (β-BaB₂O₄, β-type lithium borate) or LBO (LiB₃O₅, lithium triborate) can be also used, each of which is capable of mainly converting a wave of 1064 nm in wavelength into another wave of 532 nm in wavelength.

Also, KNbO₃ (potassium niobate) can be used as the nonlinear optical medium 400, which is capable of mainly converting a wave of 946 nm in wavelength into another wave of 473 nm in wavelength.

In this embodiment, non-reflection coating films 640, 640 are also respectively formed on both the ends of the nonlinear optical medium 400. Each film 640 has a high transmittance (HT) to both the fundamental wave (1064 nm) generated from the laser crystal 300 and the harmonic (532 nm) generated from the nonlinear optical medium 400.

The polarization direction of a laser beam will be described below.

The polarization direction (TE) of the semiconductor laser 100 is in parallel to the c-axis (Z-axis: perpendicular to the optic axis of the incident laser light) of the laser crystal 300 (Nd: YVO₄) having a high absorption efficiency. Since the fundamental wave (1064 nm) generated from the laser crystal 300 exists in the resonator as a standing wave, the harmonic generated from the nonlinear optical crystal 400 by wavelength conversion is directed in both the directions of the semiconductor laser 100 and the output mirror 500.

The harmonic exhibits linear polarization and is offset 45° from the direction of the c-axis (z-axis) of the laser crystal 300 (Nd: YVO₄). Accordingly, after passing through the laser crystal 300 (Nd: YVO₄) as a uniaxial crystal, the harmonic exhibits elliptical polarization which is converted from linear polarization due to the phase action.

In this embodiment, the second dielectric reflecting film 620 formed on the end surface of the laser crystal 300 on the output mirror 500 side has the high reflectivity (HR) to the harmonic (532 nm) generated from the nonlinear optical crystal 400, so that the harmonic does not pass through the laser crystal 300 but is reflected from the second dielectric reflecting film 620 and thereby it is directed to the output mirror 500 while keeping the linear polarization state. Accordingly, the harmonic outputted from the output mirror 500 exhibits the linear polarization, and also it has the optical output being about twice that of the harmonic generated from the nonlinear optical crystal 400.

### Modification 1

A first modification of the second dielectric reflecting film 620 will be described below.

The second dielectric reflecting film 620 formed on the end surface of the laser crystal 300 on the output mirror 500 side can be composed of a dielectric multi-layered film having a high reflectivity (HR) to the harmonic (532 nm) generated from the nonlinear optical crystal 400, having a specific reflectivity of 2% to 10% (2% ≦ PR ≦ 10%) to the fundamental wave (1064 nm) generated from the laser crystal 300, and also having a high reflectivity (HR) to the pumping light (809 nm) emitted from the semiconductor laser 100.

The dielectric multi-layered film giving the specific reflectivity of 2% to 10% (2% ≦ PR ≦ 10%) to the fundamental wave (1064 nm) generated from the laser crystal 300 is called a partial reflection (PR) coat.

The dielectric multi-layered film as the second dielectric reflecting film 620 can be formed by alternately laminating SiO₂ thin films each having a low refractive index and ZrO₂ thin films each having a high refractive index.

At this time, the laser crystal 300 (Nd: YVO₄) acts as a etalon to the fundamental wave (1064 nm) generated from the laser crystal 300, and is able to select a longitudinal mode of oscillation. As a result, it is possible to obtain a harmonic exhibiting linear polarization in a single longitudinal mode, and also to obtain an optical output in a state of stable linear polarization with less variation.

### Modification 2

A second modification of the second dielectric reflecting film 620 will be described below.

In the first modification, the second dielectric reflecting film 620 has the high reflectivity (HR) to the harmonic (532 nm) generated from the nonlinear optical crystal 400 and also has the specific reflectivity of 2% to 10% (2% ≦ PR ≦ 10%) to the fundamental wave (1064 nm) generated from the laser crystal 300. Similarly, the first dielectric reflecting film 610 formed on the end surface of the laser crystal 300 on the semiconductor laser 100 side can be configured to have a specific reflectivity of 2% to 10% (2% ≦ PR ≦ 10%) to the fundamental wave (1064 nm) generated from the laser crystal 300.

At this time, the laser crystal 300 (Nd: YVO₄) acts as a etalon to the fundamental wave (1064 nm) generated from the laser crystal 300, so that it is possible to obtain a harmonic exhibiting linear polarization in a single longitudinal mode, and also to obtain an optical output in a state of stable linear polarization with less variation.

In addition, the configuration and the function of the apparatus in the first embodiment except for the first dielectric reflecting film 610 and the second dielectric reflecting film 620 are the same as those of the prior art apparatus, and therefore, the explanation thereof is omitted.

It is to be noted that the harmonic in the specification contains at least a second-harmonic.

Example useful for the understanding of the invention.

Fig. 3 shows a configuration of a laser beam emitting apparatus 2000 pumped by a semiconductor laser.

The laser beam emitting apparatus 2000 comprises a semiconductor laser 100, a condenser lens 200, a laser crystal 300, and an output mirror 500.

In the example, the nonlinear optical crystal 400 inserted in the resonator for generating a harmonic (532 nm) in first embodiment is omitted, and a fundamental wave (1064 nm) generated from the laser crystal 300 is outputted.

The semiconductor laser 100 emits pumping light having a wavelength of 809 nm.

The laser crystal 300 is used for generating a fundamental wave. In this embodiment, the laser crystal 300 comprises Nd: YVO₄ capable of generating a fundamental wave of 1064 nm in wavelength.

A first dielectric reflecting film 610 is formed on an end surface of the laser crystal 300 on the semiconductor laser 100 side. The first dielectric reflecting film 610 comprises a dielectric multi-layered film having a high transmittance (HT) to pumping light (809 nm) emitted from the semiconductor laser 100, and also having a high reflectivity (HR) to a fundamental wave (1064 nm) generated from the laser crystal 300.

The dielectric multi-layered film as the first dielectric reflecting film 610 in this example can be formed by alternately laminating SiO₂ thin films each having a low refractive index and Ta₂O₅ thin films each having a high refractive index.

A second dielectric reflecting film 620 is formed on an end surface of the laser crystal 300 on the output mirror 500 side. The second dielectric reflecting film 620 comprises a dielectric multi-layered film having a high transmittance (HT) to the fundamental wave (1064 nm) generated from the laser crystal 300, and also having a high reflectivity (HR) to pumping light (809 nm) emitted from the semiconductor laser 100.

The dielectric multi-layered film as the second dielectric reflecting film 620 in this example can be formed by alternately laminating SiO₂ thin films each having a low refractive index and ZrO₂ thin films each having a high refractive index.

In the example having the above configuration, pumping light (809 nm) passing through the laser crystal 300 is reflected from the second dielectric reflecting film 620, to be thus returned to the laser crystal 300 again. This allows the absorption efficiency of the laser crystal 300 for the pumping light (809 nm) to be substantially doubled.

The output mirror 500 is disposed opposite to the laser crystal 300. A portion of the output mirror 500 on the laser crystal 300 side is formed in a concave-mirror shape with a suitable radius, on which a third dielectric reflecting film 630 is formed. The third dielectric reflecting film 630 comprises a dielectric multi-layered film having a high reflectivity (HR) to the fundamental wave (1064 nm) generated from the laser crystal 300.

In the laser beam emitting apparatus 2000 having the above configuration including the combination of the first dielectric reflecting film 610 of the laser crystal 300 and the third dielectric reflecting film 630 of the output mirror 500, a light flux emitted from the semiconductor laser 100 pumps the laser crystal 300 through the condenser lens 200, causing the laser crystal 300 to generate light. The light is then reciprocated between the first dielectric reflecting film 610 of the laser crystal 300 and the third dielectric reflecting film 630 of the output mirror 500, so that it is confined for a long period of time, to be thus amplified by resonance.

### Modification 3

A third modification of the second dielectric reflecting film 620 will be described below.

The second dielectric reflecting film 620 formed on the end surface of the laser crystal 300 on the output mirror 500 side can be composed of a dielectric multi-layered film having a specific reflectivity of 2% to 10% (2% ≦ PR ≦ 10%) to the fundamental wave (1064 nm) generated from the laser crystal 300, and also having a high reflectivity (HR) to the pumping light (809 nm) emitted from the semiconductor laser 100.

The dielectric multi-layer film giving the specific reflectivity of 2% to 10% (2% ≦ PR ≦ 10%) to the fundamental wave (1064 nm) generated from the laser crystal 300 is called a partial reflection (PR) coat.

The dielectric multi-layered film as the second dielectric reflecting film 620 can be formed by alternately laminating SiO₂ thin films each having a low refractive index and ZrO₂ thin films each having a high refractive index.

At this time, the laser crystal 300 (Nd: YVO₄) acts as a etalon to the fundamental wave (1064 nm) generated from the laser crystal 300, and is able to select a longitudinal mode of oscillation. As a result, it is possible to obtain a harmonic exhibiting linear polarization in a single longitudinal mode, and also to obtain an optical output in a state of stable linear polarization with less variation.

### Modification 4

A fourth modification of the second dielectric reflecting film 620 will be described below.

In the third modification, the second dielectric reflecting film 620 has the specific reflectivity of 2% to 10% (2% ≦ PR ≦ 10%) to the fundamental wave (1064 nm) generated from the laser crystal 300. Similarly, the first dielectric reflecting film 610 formed on the end surface of the laser crystal 300 on the semiconductor laser 100 side can be configured to have a specific reflectivity of 2% to 10% (2% ≦ PR ≦ 10%) to the fundamental wave (1064 nm) generated from the laser crystal 300.

At this time, the laser crystal 300 (Nd: YVO₄) acts as a etalon to the fundamental wave (1064 nm) generated from the laser crystal 300, so that it is possible to obtain a harmonic exhibiting linear polarization in a single longitudinal mode, and also to obtain an optical output in a state of stable linear polarization with less variation.

In addition, the configuration and the function of the apparatus in the example except for the first dielectric reflecting film 610 and the second dielectric reflecting film 620 are the same as those of the prior art apparatus and also they are the same as those of the apparatus in the first embodiment except that the nonlinear optical crystal 400 is omitted and the fundamental wave generated from the laser crystal 300 is outputted, and therefore, the explanation thereof is omitted.

According to example having the above configuration, the first dielectric reflecting film formed on the end surface of the laser crystal on the laser light source side has the high transmittance (HT) to the pumping light emitted from the laser light source and also has the high reflectivity (HR) to the fundamental wave generated from the laser crystal, and the second dielectric reflecting film formed on the end surface of the laser crystal on the output mirror side has the high transmittance (HT) to the fundamental wave generated from the laser crystal and also has the high reflectivity (HR) to the pumping light emitted from the laser light source side. Accordingly, after passing through the laser crystal, the pumping light can be reflected from the second dielectric reflecting film to be thus returned to the laser crystal. This allows the absorption efficiency of the laser crystal for the pumping light to be substantially doubled.

The present invention also provides the laser beam emitting apparatus including the optical resonator at least including the laser crystal and the output mirror; the laser light source for emitting pumping light to the optical resonator; and the nonlinear optical medium, inserted in the optical resonator, for generating a harmonic. In this apparatus, the first dielectric reflecting film formed on an end surface of the laser crystal on the laser light source side has a high transmittance (HT) to the pumping light emitted from the laser light source and also has a high reflectivity (HR) to the fundamental wave generated from the laser crystal; and the second dielectric reflecting film formed on an end surface of the laser crystal on the output mirror side has a high transmittance (HT) to the fundamental wave generated from the laser crystal and a high reflectivity (HR) to a harmonic generated from the nonlinear optical medium, and also has a high reflectivity (HR) to the pumping light emitted from the laser light source. Accordingly, it is possible to prevent a phenomenon that the pumping light having passed through the laser crystal is absorbed by the end surface of the nonlinear optical crystal to increase the temperature of the nonlinear optical crystal. This is effective to prevent reduction in wavelength conversion efficiency of the nonlinear optical crystal, and hence to enhance the harmonic emitting efficiency of the nonlinear optical crystal.

Moreover, since each of the first dielectric reflecting film and the second dielectric reflecting film can be configured to have the reflectivity of 2% to 10% (2% ≦ PR ≦ 10%) instead of the high transmittance (HT) to the fundamental wave generated from the laser crystal, the laser crystal is allowed to act as an etalon to the fundamental wave, and is capable of selecting a longitudinal mode of oscillation. As a result, it is possible to obtain a harmonic exhibiting linear polarization in a single longitudinal mode, and also to obtain an optical output in a state of stable linear polarization with less variation.

## Claims

1. A laser beam emitting apparatus (1000) comprising:
an optical resonator at least including a laser crystal (300) for generating a fundamental wave and an output mirror (500);
a laser light source (100) for emitting light to said optical resonator;
a nonlinear optical medium (400), inserted in said optical resonator, for generating a harmonic;
wherein a first dielectric reflecting film (610) is formed on an surface of said laser light source side of said laser crystal, said first dielectric reflecting film (610) having a high transmittance (HT) to the pumping light emitted from said laser light source (100), said first dielectric film being formed by alternately laminating SiO₂ thin films each having low refractive index, and Ta₂O₅ thin films each having a high refractive index:
and a second dielectric reflecting film (620) is formed on an end surface of said output mirror side of said laser crystal (300), said second dielectric reflecting film (620) having a high reflectivity (HR) to the pumping light emitted from said laser light source (100), said second dielectric film being formed by alternately laminating SiO₂ thin films each having a low refractive index and ZrO₂ thin films each having a high refractive index, whereby the pumping light emitted from said laser light source (100) is sent back to said laser crystal (300) and is protected to be absorbed by said nonlinear optical medium (400).

2. A laser beam emitting apparatus according to claim 1, wherein said first dielectric reflecting film (610) has a high reflectivity (HR) to the fundamental wave generated from said laser crystal (300), said second dielectric reflecting film (620) has a high transmittance (HT) to the fundamental wave generated from said laser crystal (300) and also has a high reflectivity (HR) to a harmonic generated from said nonlinear optical medium (400).

3. A laser beam emitting apparatus according to claim 1 or 2, wherein said second dielectric reflecting film (620) is constituted so as to have a reflectivity PR of 2 % ≤ PR ≤ 10 % to the fundamental wave generated from the laser crystal, and said first dielectric reflecting film (610) is constituted so as to have a reflectivity PR of 2 % ≤ PR ≤ 10 % to the fundamental wave generated from the laser crystal (300), whereby said laser crystal functions as etalon.

## Patentansprüche

1. Laserstrahlemittierendes Gerät (1000) umfassend:
einen optischen Resonator, der wenigstens einen Laserkristall (300) zur Erzeugung einer Grundwelle und einen Ausgabespiegel (500) beinhaltet;
eine Laserlichtquelle (100) zur Abgabe von Licht an den optischen Resonator;
ein nicht-lineares optisches Medium (400) eingefügt in den optischen Resonator zur Erzeugung einer Oberwelle;
wobei ein erster dielektrischer reflektierender Film (610) auf eine Oberfläche der Laserlichtquellenseite des Laserkristalls gebildet wird, wobei dieser erste dielektrische reflektierende Film (610) eine hohe Durchlässigkeit (HT) für pumpendes Licht hat, das von der Laserlichtquelle (100) emittiert wird, wobei der erste dielektrische Film alternativ gebildet wird, indem dünne Siliziumdioxidfilme laminiert werden, von denen jeder einen niedrigen Brechungsindex aufweist, und
Ta₂O₅ Filme, von denen jeder einen hohen Brechungsindex aufweist:
und ein zweiter dielektrischer Film (620) wird auf einer Endoberfläche der Ausgangsspiegelseite des Laserkristalls (300) gebildet, wobei dieser zweite dielektrische reflektierende Film (620) eine hohe Reflexivität (HR) für pumpendes Licht hat, welches von der Laserlichtquelle (100) emittiert wird, wobei dieser zweite dielektrische Film alternativ durch Laminieren dünner Siliziumdioxidfilme gebildet wird, von denen jeder einen niedrigen Brechungsindex aufweist und dünnen Zirkondioxidfilmen, von denen jeder einen hohen Brechungsindex aufweist, wobei das pumpende Licht, welches von der Laserlichtquelle (100) abgegeben wird, zum Laserkristall (300) zurückgeschickt wird und davor geschützt wird durch das nichtlineare optische Medium (400) absorbiert zu werden.

2. Laserstrahlemittierendes Gerät nach Anspruch 1, wobei der erste dielektrische reflektierende Film (610) eine hohe Reflexivität (HR) für die Grundwelle hat, die vom Laserkristall (300) erzeugt wird, wobei der zweite dielektrische reflektierende Film (620) eine hohe Durchlässigkeit (HT) für die Grundwelle hat, welche vom Laserkristall (300) erzeugt wird, und ebenso eine hohe Reflexivität (HR) für eine Oberwelle hat, die vom nicht-linearen optischen Medium (400) erzeugt wird.

3. Laserstrahlemittierendes Gerät nach Anspruch 1 oder 2, wobei der zweite dielektrische reflektierende Film (620) aufgebaut ist, um eine Reflexivität PR von 2% ≤PR ≤10% für die Grundwelle zu haben, welche durch den Laserkristall erzeugt wird, und der erste dielektrische Film (610) so aufgebaut ist, dass er eine Reflexivität PR von 2% ≤PR ≤10% für die Grundwelle aufweist, die vom Laserkristall (300) erzeugt wird, wobei der Laserkristall als Etalon arbeitet.

## Revendications

1. Un dispositif d'émission de faisceau laser (1000), comprenant :
un résonateur au moins comprenant un cristal laser (300) pour produire une onde fondamentale et un miroir de sortie (500) ;
une source de lumière laser (100) pour émettre de la lumière vers ledit résonateur optique ;
un milieu optique non linéaire (400), inséré dans ledit résonateur optique, pour produire une harmonique,
dans lequel un premier film réflecteur diélectrique (610) est formé sur une surface du côté de ladite source de lumière laser dudit cristal laser, ledit premier film réflecteur diélectrique (610) présentant une transmittance élevée (HT) à la lumière de pompage émise depuis ladite source de lumière laser (100), ledit premier film diélectrique étant formé par laminage alterné de films minces de SiO₂ présentant chacun un faible indice de réfraction et de films minces de Ta₂O₅ présentant chacun un fort indice de réfraction ;
et un second film réflecteur diélectrique (620) est formé sur une surface d'extrémité du côté dudit miroir dudit cristal laser (300), ledit second film réflecteur diélectrique (620) présentant une réflectivité élevée (HR) à la lumière de pompage émise depuis ladite source de lumière laser (100), ledit second film diélectrique étant formé par laminage alterné de films minces de SiO₂ présentant chacun un faible indice de réfraction et de films minces de ZrO₂ présentant chacun un fort indice de réfraction, de sorte que la lumière de pompage émise depuis ladite source de lumière laser (100) soit renvoyée vers ledit cristal laser (300) et soit protégée de l'absorption par ledit milieu optique non linéaire (400).

2. Un dispositif d'émission de faisceau laser selon la revendication 1, dans lequel ledit premier film réflecteur diélectrique (610) présente une réflectivité élevée (HR) à l'onde fondamentale produire par ledit cristal laser (300), ledit second film réflecteur diélectrique (620) présente une transmittance élevée (HT) à l'onde fondamentale produire par ledit cristal laser (300) et présente également une réflectivité élevée (HR) à une harmonique produite par ledit milieu optique non linéaire (400).

3. Un dispositif d'émission de faisceau laser selon la revendication 1 ou 2, dans lequel ledit second film réflecteur diélectrique (620) est constitué de manière à présenter une réflectivité PR de 2% ≤ PR ≤ 10% à l'onde fondamental produite par le cristal laser, et ledit premier film réflecteur diélectrique (610) est constitué de manière à présenter une réflectivité PR de 2% ≤ PR ≤ 10% à l'onde fondamental produite par le cristal laser (300), de sorte que ledit cristal laser fonctionne comme étalon.
